# EUROPÄISCHE PATENTSCHRIFT

(11) **EP 3 621 717 B1**
(45) Veröffentlichungstag und Bekanntmachung des Hinweises auf die Patenterteilung: **01.06.2022**
(21) Anmeldenummer: 18726066.6
(22) Anmeldetag: 27.04.2018
(51) Int. Cl.: B01D 29/11, B01D 29/52, B01D 29/66

(54) **FILTERVORRICHTUNG**
FILTER APPARATUS
DISPOSITIF DE FILTRATION

(30) Priorität: 08.05.2017 DE 102017004661
(43) Veröffentlichungstag der Anmeldung: 18.03.2020
(73) Patentinhaber: Hydac Process Technology GmbH, 66538 Neunkirchen (DE)
(72) Erfinder: WNUK, Ralf, 66450 Bexbach/Kleinottweiler (DE); BÖTTCHER, Thomas, 66557 Illingen-Hüttigweiler (DE)
(74) Vertreter: Bartels und Partner, Patentanwälte
(86) Internationale Anmeldenummer: PCT/EP2018/060864
(87) Internationale Veröffentlichungsnummer: WO 2018/206315

(56) Entgegenhaltungen:
- WO-A1-2005/072845
- DE-U1-202012 100 368
- JP-A- 2014 034 029
- JP-A- 2014 034 029
- RU-C1- 2 082 484

## Beschreibung

Die Erfindung betrifft eine Filtervorrichtung mit den Merkmalen im Oberbegriff von Anspruch 1.

Dahingehende Filtervorrichtungen finden in industriellen Anlagen und Maschinen unterschiedlicher Art Anwendung zur Abreinigung der darin eingesetzten Fluide, wie Prozessflüssigkeiten, Schmierstoffe und dergleichen. Die Leistungsfähigkeit einer Filtervorrichtung ist im Wesentlichen durch die Filterelemente und insbesondere deren Filtermaterialien bestimmt. Hierbei sind Stabilität, Langlebigkeit und eine gute Abreinigung der Filtermaterialien und Filterelemente von Partikelverschmutzungen die entscheidenden Kriterien. Viele Filtervorrichtungen sind als sogenannte Rückspülfilter konzipiert, so dass im laufenden Filtrationsbetrieb die einzelnen Filterelemente nacheinander kontinuierlich mittels der Rückspüleinrichtung abgereinigt werden können. Beispielsweise bei Ballastwasser-Anwendungen können hohe Schmutzfrachten auftreten, welche die Filterelemente und ihre Filtermaterialien innerhalb kürzester Zeit zusetzen und insoweit den Filtrationsprozess blockieren. Die Ausgestaltung der Rückspüleinrichtung und der Drucksteuereinrichtung ist demgemäß derart gewählt, dass eine bestmögliche Abreinigung der Filterelemente bei der Rückspülung auch bei solch hohen Schmutzfrachten verlässlich bewirkt ist.

Eine Filtervorrichtung ist beispielsweise aus DE 10 2011 111 457 A1 bekannt. Bei dieser bekannten Filtervorrichtung fließt das regelmäßig mit Partikelverschmutzung versehene und demgemäß zu filtrierende Fluid respektive Unfiltrat für den eigentlichen Filtrationsvorgang über den Filtereinlass in das Filtergehäuse der Vorrichtung und durchströmt die Filterelemente von innen nach außen. Das derart abgereinigte Fluid verlässt dann anschließend das Filtergehäuse über den im Gehäuse angeordneten Filterauslass. Beim Durchströmen der Filterelemente von innen nach außen lagern sich die aus dem Fluidstrom abzuscheidenden Partikel an der Innenseite der Filterelemente ab und der abgereinigte Fluidstrom durchquert die Filterelemente in radialer Richtung gesehen von innen nach außen. Typischerweise sind die Filterelemente bauraumsparend in einer Kreisform im Filtergehäuse angeordnet und weisen eine vorgebare Filterfeinheit auf, die spezifisch an die Größe der abzuscheidenden Partikel angepasst ist.

Zur Rückspülung eines Filterelements wird ein Spülarm der Rückspüleinrichtung unter die untere Öffnung des abzureinigende Filterelement mittels eines hierfür vorgesehenen Zentralantriebs schwenkbar bewegt, wobei die genannte Öffnung ansonsten der Zufuhr von Unfiltrat während des eigentlichen Filtrationsprozesses dient. Bedingt durch das entstehende Druckgefälle zwischen dem Filtereinlass und einer Rückspülleitung, welche sich an den Spülarm anschließt, und durch eine Rückspülarmatur, regelmäßig in Form einer Ventileinrichtung öffen- und schließbar ist, entsteht eine radiale Strömung, diesmal von außen nach innen durch das Filterelement hindurch und die auf seiner Innenseite abgeschiedene Partikelverschmutzung wird durch nachströmendes Fluid von der Reinseite der Filtervorrichtung stammend und über den Rückspülarm im Rahmen der Rückspülung in Richtung der Rückspülleitung bei geöffneter Armatur aus der Filtervorrichtung ausgetragen. Während dieses Rückspülvorganges ist der Filtrationsbetrieb mit den verbleibenden Filterelementen sichergestellt und nach Abschluss des Rückspülvorganges an diesem Filterelement lässt sich der Rückspülarm der Rückspüleinrichtung in Richtung eines diesem Element nachfolgenden Filterelements weiter bewegen, um dann dessen Abreinigung von Partikelverschmutzung, entstanden im Rahmen der vorangehenden Filtration, vorzunehmen.

Die bekannte Filtervorrichtung weist ferner eine Drucksteuereinrichtung mit einer Vielzahl von Drucksteuerelementen auf, jeweils gebildet aus einem vorzugsweise pneumatisch betätigbaren Absperrventil, das einen bewegbaren Ventilkörper aufweist, durch den ein zuordenbarer Durchlass vom Verbindungsraum durch die jeweils obere Elementöffnung eines Filterelementes steuerbar ist. Hierbei bildet der Ventilkörper in Zusammenwirken mit dem Rand der Elementöffnung an der Deckplatte eine Art Plattenventil aus. Der Verbindungsraum selbst ist zumindest teilweise während des Filtrationsvorganges über die jeweils obere Öffnung der zur Filtration eingesetzten Filterelemente mit der Unfiltrat- oder Einlassseite der Filtervorrichtung über die unteren Elementöffnungen dieser zur Filtration eingesetzten Filterelemente verbunden, was zu einer ständigen Befüllung des Verbindungsraumes mit Unfiltrat im Betrieb der Vorrichtung führt. Bei der Rückspülung des jeweiligen Filterelementes kommt es dann nicht nur zur einer Durchströmung mit Filtrat von außen nach innen durch das Element hindurch, sondern gleichzeitig über das Druckgefälle in Richtung der Rückspülleitung respektive dem Schmutzauslass der Filtervorrichtung wird Unfiltrat aus dem Verbindungsraum bei jeweils geöffnetem Plattenventil permanent "nachgesaugt", wobei eine forcierte Tangentialströmung (Cross-Flow-Strömung) mit Unfiltrat aus dem Verbindungsraum heraus im Wesentlichen quer zur einströmenden Abreinigungsmenge von der Filtratseite der Filtervorrichtung ausgehend erfolgt, was die Abreinigung von partikulären Verschmutzungen auf der Innenseite des rückzuspülenden Filterelementes deutlich unterstützt. Innerhalb des jeweils rückzuspülenden Element bildet sich also eine Art Kernströmung aus, die hauptsächlich vom als Reservoir ausgebildeten Verbindungsraum gespeist und durch einen Freistrahleffekt unterstützt wird, bei dem zusätzlich Filtrat von der Filtratseite der Vorrichtung in das Innere des abzureinigenden Filterelements nachströmt. Dieser Vorgang bildet eine erste Phase der Rückspülung aus, bei der die Partikelverschmutzung abgelöst wird.

Wird im Rahmen des Rückspülvorganges dann durch Ansteuern des zugehörigen Plattenventils die obere Elementöffnung verschlossen und mithin der Durchlass zwischen Verbindungsraum und dem Inneren des Filterelementes schlagartig gesperrt, kommt es in der verbleibenden Flüssigkeitssäule im Innern des rückgespülten Filterelementes zu einem impulsartigen Druckstoß, der etwaig noch am Filterelement oder seinem Elementmaterial verbleibende Partikel im Rahmen der Rückspülung "absprengt" und dem Auslass der Filtervorrichtung zuführt. Dergestalt lassen sich die Abreinigungsprozesse deutlich beschleunigen und verbessern. Dieser Vorgang bildet die zweite Phase der Rückspülung in Form des eigentlichen Schmutzaustrages. Durch das Verschließen des Verbindungsraums respektive des Reservoirs saugt die sich bereits in Bewegung befindliche Fluid- oder Flüssigkeitssäule Fluid von der Filtratseite der Vorrichtung nach, da durch die mittels des Drucksteuerelements verschlossene obere Elementöffnung kein weiteres Fluid vom Verbindungsraum nachströmen kann. Dergestalt werden die vorzugsweise konisch ausgebildeten Filterelemente, besonders bevorzugt als Spaltsiebrohre ausgebildet, rückstandsfrei von den Partikeln abgereinigt. Der Schmutzausttrag erfolgt weiter über die Ablauföffnung bei geöffneter Rückspülleitung und nach erfolgter Abreinigung öffnet das zugehörige Plattenventil und der Spülarm dreht unter das nächste abzureinigende Filterelement, so dass sich der Prozess der Rückspülung für das nachfolgende Element wiederholen kann. Nach Beenden des Rückspülzyklus schließt die Rückspülarmatur in Form der Ventileinrichtung.

Die JP 2014-34029 beschreibt eine Filtervorrichtung mit den Merkmalen im Oberbegriff von Anspruch 1 mit einer Mehrzahl von Filterelementen, die in einem Filtergehäuse mit einem Filtereinlass für ein zu filtrierendes Fluid und einem Filterauslass für das gefilterte Fluid aufnehmbar sind, wobei die Filterelemente für eine Filtration oder Rückspülung über ihren Elementmantel in beiden Richtungen durchströmbar sind und die an ihren beiden gegenüberliegenden Enden je eine obere und eine untere Elementöffnung aufweisen, wobei im Betrieb gleichzeitig zumindest ein Filterelement die Filtration vornimmt und zumindest ein anderes Filterelement zum Abreinigen seiner wirksamen Filterfläche mittels einer Rückspüleinrichtung rückspülbar ist, die zur Unterstützung der Rückspülung mit einer Drucksteuereinrichtung zusammenwirkt, die mindestens ein Drucksteuerelement aufweist, mittels dessen bei einem Rückspülvorgang die Fluidströmung entlang des abzureinigenden Filterelements steuerbar ist, wobei die Filtervorrichtung einen Verbindungsraum aufweist, der zumindest teilweise mit den oberen Elementöffnungen des die Unfiltratseite bildenden Filterhohlraumes der Filterelemente in Verbindung ist, wobei ein Fluidweg vorgesehen ist, über den bei der Filtration Unfiltrat in den Verbindungsraum einströmt, und mittels des Drucksteuerelementes der Durchstrom von Unfiltrat durch die dem abzureinigenden Filterelement zugehörige obere Elementöffnung hindurch steuerbar ist, wobei die Rückspüleinrichtung mit einer Ablauföffnung für das Abreinigungsfluid unter die untere Elementöffnung des jeweils rückzuspülenden Filterelementes bringbar ist, wobei die Drucksteuereinrichtung mindestens eine Steuerplatte aufweist, die innerhalb des Verbindungsraumes angeordnet in vorgebbarer Abfolge die einzelnen oberen Elementöffnungen der jeweils rückzuspülenden Filterelemente mit zunehmender Überdeckung und erneuter Freigabe seitlich überfährt, und wobei die Ablauföffnung der Rückspüleinrichtung zumindest noch teilweise in fluidführender Verbindung mit der unteren Elementöffnung des jeweils rückzuspülenden Filterelementes ist, während dessen die obere Elementöffnung von der Drucksteuereinrichtung angesteuert ist, wobei ein Sammelraum der Rückspüleinrichtung aus einer Ausnehmung in einer Abdeckplatte gebildet ist, die von einem Rückspülarm geführt ist, in den die Ablauföffnung mündet, die vorzugsweise über den Rückspülarm fluidführend mit einer Ventilsteuereinrichtung verbunden ist.

Weitere Filtervorrichtungen gehen aus der DE 20 2012 100 368 U1 und der RU 2 082 484 C1 hervor.

Ausgehend von diesem Stand der Technik liegt der Erfindung die Aufgabe zugrunde, unter Beibehalten des vorstehend beschriebenen, in der Praxis sehr bewährten und technisch verlässlichen Filtrations- und Rückspülprozesses diesen dahingehend weiter zu verbessern, dass ein vereinfachtes Ansteuerkonzept für den Rückspülvorgang erreicht ist.

Diese Aufgabe wird gelöst durch eine Filtervorrichtung mit den Merkmalen des Patentanspruchs 1 in seiner Gesamtheit. Vorteilhafte Ausgestaltungen der Filtervorrichtung sind Gegenstand der Unteransprüche. Erfindungsgemäß ist diese Aufgabe gemäß dem kennzeichnenden Teil des Patentanspruchs 1 dadurch gelöst, dass ein kreisförmiges Anschlussstück und die Ausnehmung, die nierenförmig ist, in verschiedenen Ebenen in der nierenförmigen Abdeckplatte, die nierenförmig ist, ausgebildet und angeordnet sind; dass die Ablauföffnung von dem Anschlussstück räumlich umgeben ist; und dass das Anschlussstück zum Anschluss der Abdeckplatte an den Rückspülarm vorgesehen ist.

Es ist ferner vorgesehen, dass die Drucksteuereinrichtung mindestens eine Steuerplatte aufweist, die innerhalb des Verbindungsraums angeordnet in vorgebbarer Abfolge die einzelnen oberen Elementöffnungen der jeweils rückzuspülenden Filterelemente mit zunehmender Überdeckung und erneuter Freigabe seitlich überfährt, und dass die Ablauföffnung der Rückspüleinrichtung zumindest noch teilweise in fluidführender Verbindung mit der unteren Elementöffnung des jeweils rückzuspülenden Filterelements ist, während dessen die obere Elementöffnung von der Drucksteuereinrichtung angesteuert ist.

Durch die im Verbindungsraum umlaufend bewegbar angeordnete mindestens eine Steuerplatte mit seitlicher Bewegungsrichtung entfallen einzelne, den jeweiligen Filterelementen zugeordnete in vertikaler Richtung bewegbare Steuer- oder Ventilteile in Form der Plattenventile. Die Steuerplatte überfährt demgemäß zeitnah und verzögerungsfrei die oberen Elementöffnungen der einzelnen Filterelemente und unterbricht auf diese Weise die Fluidverbindung vom Verbindungsraum zum Filterhohlraum im Inneren des jeweiligen Filterelementes, was den bereits beschriebenen, impulsartigen Druckstoß für die Partikelabreinigung und den Freistrahleffekt auslöst. Da die Steuerplatte im Betrieb der Filtervorrichtung fortlaufend umläuft, ist dergestalt ein kontinuierlicher Abreinigungsbetrieb im Rückspülmodus erreicht. Die Steuerplatte ist derart dimensioniert, dass zumindest eine Elementöffnung vollständig überdeckt werden kann, es ist jedoch auch vorstellbar, zwei oder mehr Elementöffnungen zumindest teilweise, aber gleichzeitig mittels der jeweiligen Steuerplatte zu überdecken. Da deutlich weniger Komponenten bewegt werden müssen und anzusteuern sind, ist der Kosten- und Wartungsaufwand reduziert sowie die Betriebs- und Funktionssicherheit erhöht.

Eine verbesserte Wirksamkeit der Rückspülung der Filterelemente ist erfindungsgemäß auch dadurch erreicht, dass die einen Spülarm mit Ablauföffnung aufweisende Rückspüleinrichtung der Steuerplatte funktionsmäßig vorauseilt, was insbesondere bei zeit- oder druckgesteuerter Einleitung der Rückspülung die tangentiale Cross-Flow-Strömung innerhalb des rückzuspülenden Filterelements im Rahmen der Partikelabreinigung noch weiter begünstigt. Durch einen hieraus vorgebbaren räumlichen Versatz von Drucksteuer- zu Rückspüleinrichtung und das hieraus resultierende Verhältnis der zumindest teilweise unterschiedlichen Überdeckungsbereiche von jeweils oberer Elementöffnung zu der zuordenbaren unteren Elementöffnung des jeweiligen abzureinigenden Filterelements ist der Strömungsverlauf für den jeweiligen Rückspülvorgang je nach Abreinigungserfordernis einstellbar. Vorzugsweise beträgt der zu wählende räumliche Versatz von Drucksteuer- und Rückspüleinrichtung gegenüber einer gemeinsamen Antriebs- oder Rotationsachse im Rahmen der Rückspülvorgänge für eine Partikelabreinigung etwa 18°.

Von der Anzahl und Anordnung der Filterelemente im Filtergehäuse, beispielsweise entlang einer oder mehrerer konzentrischer Kreislinien, hängt Anzahl und Anordnung der eingesetzten Steuerplatten und Ablauföffnungen ab, die jeweils um die gemeinsame Antriebsachse auf gleichen Umlaufbahnen drehbar angeordnet sind. Besonders bevorzugt ist die rotatorische Bewegung der Drucksteuereinrichtung an den oberen Elementöffnungen und der Rückspüleinrichtung an den unteren Elementöffnungen miteinander gekoppelt, beispielsweise sind beide Einrichtungen starr an der gemeinsamen Antriebsachse angeordnet, wodurch ein einfacher konstruktiver Aufbau der Filtervorrichtung und eine hohe Betriebssicherheit und Wirksamkeit der Rückspülung der Filterelemente erreicht sind. Zur Rückspülung werden beide Einrichtungen unter bzw. über die einzelnen Filterelemente respektive deren Elementöffnungen gedreht und reinigen diese im Rahmen der Rückspülung nacheinander ab.

Die Rückspüleinrichtung weist für die Realisierung des angesprochenen Versatzes den vergrößerten Sammelraum mit der Ablauföffnung auf, der bereits fluidführend mit dem in der Abfolge der Rückspülung nachfolgenden Filterelement über dessen untere Elementöffnung zumindest teilweise verbunden ist, während die Steuerplatte der Steuereinrichtung noch das in der Folge vorangehende Filterelement mit seiner oberen Elementöffnung von der Seite her kommend überfährt. Auf diese Weise ist ein zeitlich verlängerter Rückspülvorgang für das jeweils in der Abfolge nachfolgende oder nächste Filterelement realisiert, da über den gemeinsamen Sammelraum der Rückspüleinrichtung vor Abschluss der Rückspülung des einen Filterelements unter Einsatz der Steuerplatte bereits die Rückspülung des in der Abfolge nächsten Filterelements in Gang gesetzt ist. Vorzugsweise überfahren dabei die beiden Einrichtungen die zuordenbaren Elementöffnungen in der Abfolge vollständig und im Wesentlichen abstandsfrei.

Der Sammelraum ist durch eine nierenförmig vergrößerte Ausnehmung oder Ausfräsung einer vorzugsweise plattenförmig ausgestalteten Rückspüleinheit, also in der Art einer Abdeckplatte, der Rückspüleinrichtung ausgebildet und deckt aufgrund seiner Größe mehr als nur eine untere Elementöffnung unmittelbar benachbarter Filterelemente entlang der Kreislinie ab. Auf diese Weise ist sichergestellt, dass bei der erfindungsgemäßen Lösung zumindest zeitweise Fluid als Rückspülflüssigkeit aus zwei oder gegebenenfalls mehr Filterelementen über den Rückspülarm nach außen abgeleitet werden kann. Die Filterelemente sind dabei, wie bereits dargelegt, entlang einer oder mehrerer, konzentrischer Kreislinien angeordnet und die Drucksteuereinrichtung und die Rückspüleinrichtung werden in gleichförmiger Rotationsbewegung entlang der oberen und unteren Elementöffnungen geführt. Die Dauer der Rückspülung kann über die Anzahl der Umdrehungen oder auch über eine vorbestimmte Zeitperiode gesteuert werden. Typische Rotationsgeschwindigkeiten für eine erfindungsgemäße Filtervorrichtung sind beispielsweise Werte im Bereich von zwei bis drei Sekunden pro Umdrehung. Die Drehrichtung für die beiden Einrichtungen erfolgt in Draufsicht auf die Vorrichtung im Uhrzeigersinn.

Bei einer weiteren bevorzugten Ausführungsform der erfindungsgemäßen Filtervorrichtung ist der Sammelraum der Rückspüleinrichtung aus einer Ausnehmung in der Abdeckplatte gebildet, die als Rückspüleinheit dient und von einem Rückspülarm geführt ist, in den die Ablauföffnung mündet, die vorzugsweise über den Rückspülarm fluidführend mit der Ventilsteuereinrichtung der Rückspülarmatur verbunden ist. Dank der außerhalb des Filtergehäuses angeordneten Ventilsteuereinheit lässt sich in Verbindung mit der Drucksteuereinrichtung die Partikelabreinigung bei der Rückspülung noch weiter verbessern, insbesondere wenn der Ventilsteuereinrichtung ein relativ langes Leitungsstück nachfolgt, das insoweit zu einem erhöhten Druckgefälle nach der Drucksteuereinrichtung führt, was das Ablösen der Partikel von dem jeweiligen Filterelement weiter unterstützt.

Weiter ist vorteilhaft, dass die Erstreckung des Sammelraums derart gewählt ist, dass zumindest in einer Schwenkstellung des Rückspülarmes zwei untere Elementöffnungen zweier benachbarter Filterelemente vollständig überdeckt sind. Auf diese Weise ist ein besonders effektives Rückspülen des jeweiligen Filterelementes im laufenden Filtrationsbetrieb mit den anderen Filterelementen der Filtervorrichtung realisiert. Der Rückspülarm ist vorzugsweise über eine Welle fest mit der Steuerplatte oberhalb der Filterelemente verbunden. Beide werden gleichzeitig und mit gleicher, relativ hoher Geschwindigkeit durch einen Motor als dem gemeinsamen Zentralantrieb, vorzugsweise einen Getriebemotor, angetrieben.

Bei einer weiteren bevorzugten Ausführungsform der erfindungsgemäßen Filtervorrichtung weisen die Drucksteuer- und die Rückspüleinrichtung den gemeinsamen Antrieb auf, der über starre Antriebselemente die Steuer- und die Abdeckplatte mit gleichbleibendem räumlichem Versatz (18°) ansteuert, oder alternativ sind die Drucksteuer- und die Rückspüleinrichtung stationär innerhalb des Filtergehäuses angeordnet und die Filterelemente werden mittels des gemeinsamen Antriebs karussellartig unter die Einrichtungen verfahrbar. Die rotatorische Relativbewegung von Drucksteuer- und Rückspüleinrichtung zu den jeweiligen Filterelementen ermöglicht einen kompakten Aufbau der Filtervorrichtung als Ganzes in einem gemeinsamen Filtergehäuse.

Bei einer weiteren bevorzugten Ausführungsform der erfindungsgemäßen Filtervorrichtung sind die oberen und die unteren Elementöffnungen eines jeden Filterelements in Zwischenböden innerhalb des Filtergehäuses angeordnet, deren Durchlassöffnungen durch die Elementöffnungen selbst gebildet sind. Die Zwischenböden unterteilen das Filtergehäuse in den oberhalb der Filterelemente angeordneten Unfiltrat führenden Verbindungsraum, einen die Filterelemente aufnehmenden Filtrationsraum, der Filtrat führt und einen unterhalb der Filterelemente angeordneten Teilraum, der ebenso wie der Verbindungsraum Unfiltrat führt. Die eben verlaufenden Zwischenböden dienen darüber hinaus der Lagefixierung der Filterelemente innerhalb der Filtervorrichtung und gewährleisten eine sichere Verfahrführung für die beiden Einrichtungen, die jeweils mit ihrer Steuer- und Abdeckplatte über bzw. unter dem Zwischenboden entlang und unter Anlage mit demselben verfahrbar mittels des zentralen Antriebs bewegt sind.

Weiter ist vorteilhaft, dass die Steuerplatte der Drucksteuereinrichtung und die Abdeckplatte der Rückspüleinrichtung im Wesentlichen abstandsfrei den jeweiligen Zwischenboden mit den Elementöffnungen seitlich überfahren. Auf diese Weise kommt es während der Fluidführung zu Drosseleffekten bei der Ansteuerung der freien Querschnitte der Elementöffnungen, was das Auslösen des Druckstoßes bei der Partikelabreinigung unterstützt.

Bei einer bevorzugten Ausführungsform der Erfindung begrenzt die Abdeckplatte mit Überständen vorgebbarer Länge als Teil der angestrebten Dimensionierung, insbesondere in der Verfahrrichtung gesehen, seitlich den Sammelraum und ist in gleitender Anlage mit dem Zwischenboden mit den unteren Elementöffnungen der Filterelemente. Dergestalt ist eine verbesserte Abdichtung des Sammelraumes gegenüber dem Unfiltratraum unterhalb des Zwischenbodens, auf dem die Filterelemente in vertikaler Anordnung stehen, erreicht.

Bei einer weiteren bevorzugten Ausführungsform der erfindungsgemäßen Filtervorrichtung ist die Dauer der jeweiligen Rückspülung über die Anzahl der Umdrehungen mit dem gemeinsamen Antrieb oder über eine vordefinierte Rückspülzeit gesteuert. Dabei werden die Drucksteuer- und die Rückspüleinrichtung mit konstanter Geschwindigkeit bewegt, um ein kontinuierliches Abreinigen der Filterelemente im Rückspülvorgang zu gewährleisten. Ferner lässt sich der Rückspülvorgang über eine Differenzdruckermittlung an den zusehends von Partikelverschmutzungen beaufschlagten Filterelementen auslösen.

Vorzugsweise sind die jeweiligen Filterelemente konisch ausgebildet. Durch die konische Ausbildung der Filterelemente mit vom unteren Ende zum oberen Ende sich verringerndem Durchmesser wird die Filtrationsleistung des dabei von innen nach außen durchströmten Filterelements erhöht. Weiter kommt es bei der Rückspülung mit anschließendem Druckstoß zu einer verbesserten Partikelabreinigung unter Einbezug des bereits eingangs erwähnten Kernströmungseffekts im Inneren des rückzuspülenden oder abzureinigenden Filterelements. Vorzugsweise sind die Filterelemente der Filtervorrichtung allesamt gleich ausgebildet. Es ist jedoch auch vorstellbar, Filterelemente mit unterschiedlicher Gestalt und unterschiedlicher Dimensionierung, beispielsweise mit unterschiedlichen Durchmessern, nebeneinander im Filtergehäuse anzuordnen. Als Filtermaterial kommt vorzugsweise ein Drahtgewebe zum Einsatz. Auch ein versintertes Drahtgewebe oder Filtermaterialien mit einer Beschichtung versehen sind denkbar. Ferner können für die Filterelemente sogenannte Spaltsiebrohre mit und ohne Filtermaterialien, vorzugsweise aus Edelstahlmaterialien gebildet, verwendet werden.

Weitere Vorteile und Merkmale der Erfindung ergeben sich aus den Figuren und der nachfolgenden Beschreibung der Zeichnung. Die vorstehend genannten und die weiter angeführten Merkmale können erfindungsgemäß jeweils einzeln oder in beliebigen Kombinationen an einer erfindungsgemäßen Filtervorrichtung realisiert sein. Die in den Figuren gezeigten Merkmale sind rein schematisch und nicht maßstäblich zu verstehen. Es zeigen:
- Fig. 1a, 1b: jeweils in perspektivischer Ansicht ein Ausführungsbeispiel einer erfindungsgemäßen Filtervorrichtung in zumindest teilweise geschnittener Darstellung mit einem Versatz zwi-schen den Positionen von Drucksteuer- und Rückspüleinrichtung;
- Fig. 2: eine Teildarstellung der Filtervorrichtung aus den Fig. 1a und 1b zur Veranschaulichung der Ausgestaltung und Funktionsweise der Drucksteuereinrichtung in perspektivischer Ansicht;
- Fig. 3a, 3d: zwei perspektivische Darstellungen, einmal in Draufsicht, einmal in Unteransicht der Steuerplatte der in Fig. 2 gezeigten Drucksteuereinrichtung;
- Fig. 3b: in stirnseitiger Draufsicht die Steuerplatte nach der Fig. 3a;

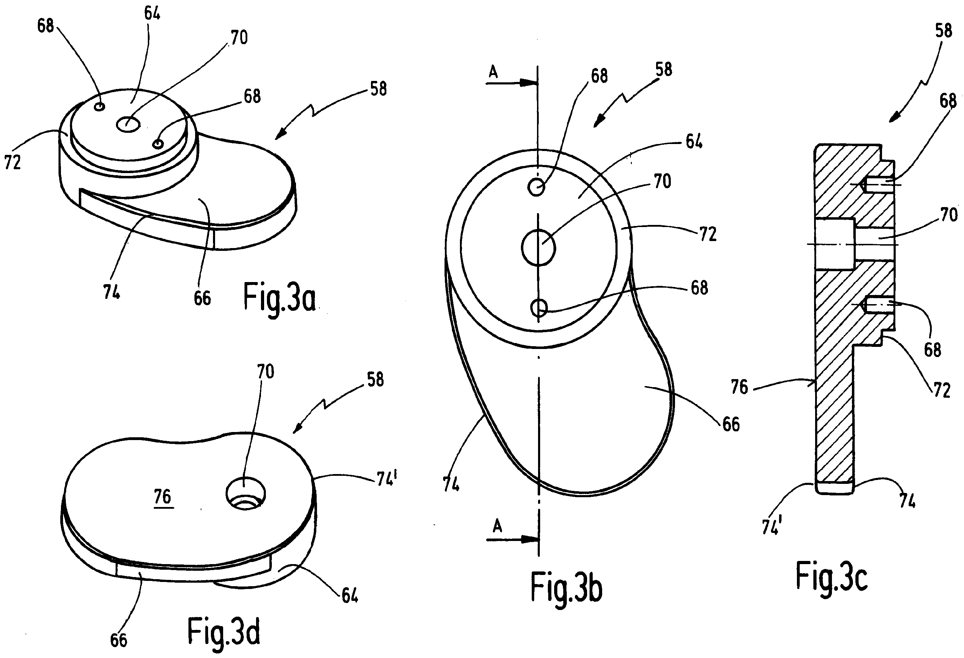

- Fig. 3 c: einen Längsschnitt der Steuerplatte entlang der Line A-A in Fig. 3b;

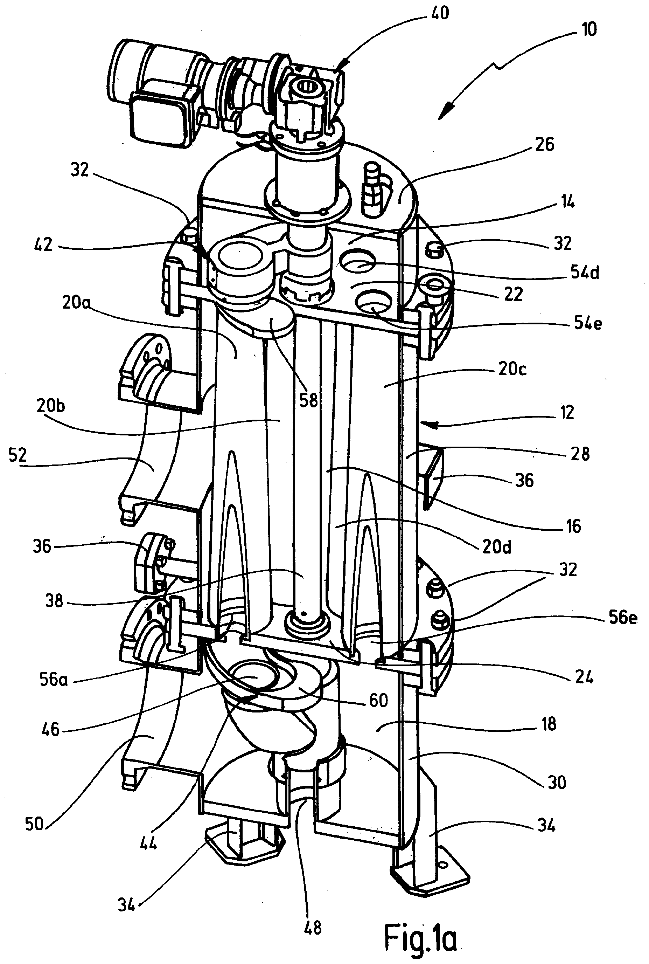

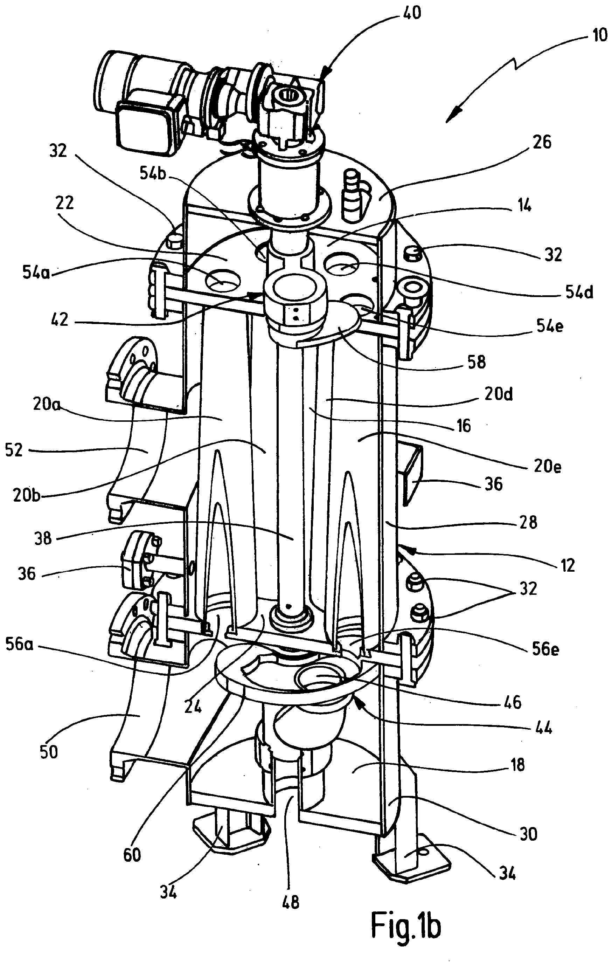

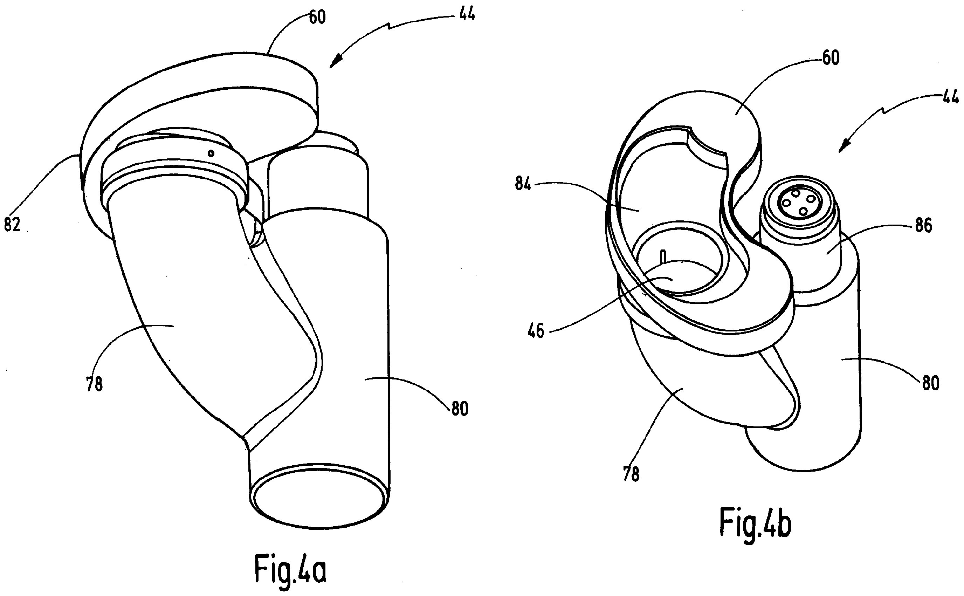

- Fig. 4a, 4b: jeweils die Rückspüleinrichtung der in den Fig. 1a und 1b gezeigten Filtervorrichtung in perspektivischer Darstellung aus unterschiedlichen Blickrichtungen, von unten bzw. von oben;

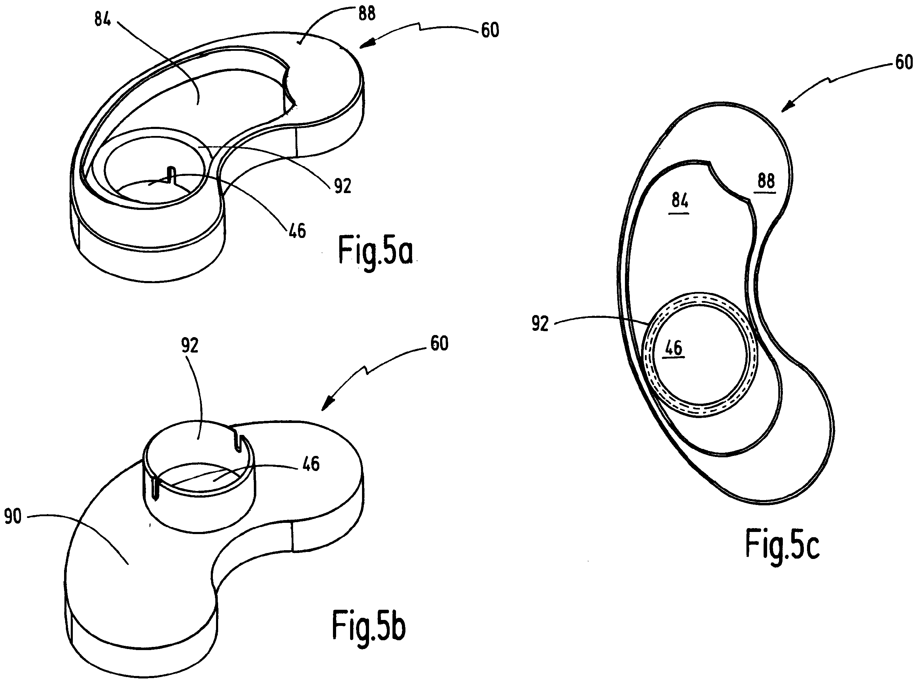

- Fig. 5a, 5b,5c: zwei perspektivische Darstellungen, aus unterschiedlichen Blickrichtungen von oben und unten, bzw. eine Draufsicht auf die Abdeckplatte der in den Fig. 4a und 4b gezeigten Rückspüleinrichtung; und

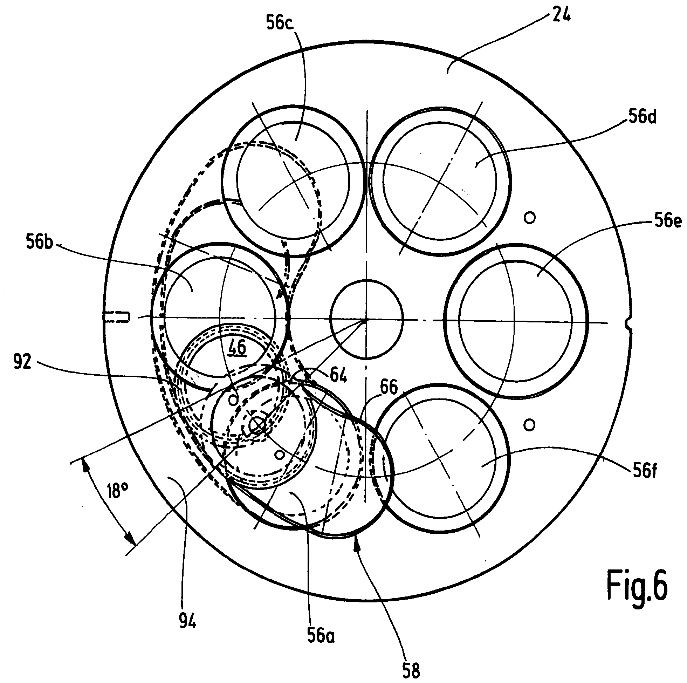

- Fig. 6: eine fiktiv übereinander gelegte Ansicht mit einem unteren Zwischenboden der Filtervorrichtung aus den Fig. 1a und 1b zur Veranschaulichung des räumlichen Versatzes zwischen der Drucksteuer- und der Rückspüleinrichtung.

Die Fig. 1a und 1b zeigen jeweils in perspektivischer Darstellung und teilweise im Längsschnitt eine Filtervorrichtung 10 mit einem zylinderförmigen Filtergehäuse 12, welches in einen Verbindungsraum 14, einen Filtrationsraum 16 und einen Zwischenraum 18 unterteilt ist. Im Filtrationsraum 16 sind insgesamt sechs Filterelemente angeordnet, von denen lediglich vier Elemente 20a, b, d und e gezeigt sind. Die teilweise geschnitten dargestellten Filterelemente 20 sind jeweils konisch ausgebildet mit vom unteren Ende zum oberen Ende sich verringerndem Durchmesser. Die Filterelemente 20 sind auf einer Kreislinie gleichmäßig und rotationssymmetrisch zur Symmetrie- oder Längsachse des Filtergehäuses 12 angeordnet. Mit ihrem oberen und ihrem unteren Ende 54, 56 sind die einzelnen Filterelemente 20 jeweils in einen ersten Zwischenboden 22, welcher den Verbindungsraum 14 vom Filtrationsraum 16 trennt, bzw. einen zweiten Zwischenboden 24, welcher den Filtrationsraum 16 vom Zwischenraum 18 trennt, in senkrecht verlaufender Anordnung eingesetzt und dort gehalten.

Das Filtergehäuse 12 umfasst ein oberes Gehäuseteil 26 mit dem Verbindungsraum 14, ein mittleres Gehäuseteil 28 mit dem Filtrationsraum 16 und ein unteres Gehäuseteil 30 mit dem Zwischenraum 18. Über einzelne Ringflansche sind die Gehäuseteile 26, 28 und 30 miteinander lösbar verbunden, wobei der jeweilige Zwischenboden 22 oder 24 sandwichartig und quer in dem jeweiligen Verbund gebildet aus den Ringflanschen aufgenommen ist. Der jeweilige Verbund aus Ringflanschen mit den dazwischen festgelegten Zwischenböden 22, 24 ist durch eine Mehrzahl von Schraub-Befestigungselementen 32 fest miteinander verbunden. Am unteren Gehäuseteil 30 sind fußartige Sockelteile 34 vorgesehen, mit welchen die Filtervorrichtung 10 auf einer nicht näher dargestellten Bodenfläche aufgeständert werden kann.

Die Filtervorrichtung 10 ist Teil einer nicht näher dargestellten Prozessanlage. Über ein seitlich am mittleren Gehäuseteil 28 angeordnetes Anschluss- und Betätigungsteil 36 kann die Filtervorrichtung 10 auch an eine zentrale Steuerung (nicht dargestellt) der Prozessanlage angeschlossen sein. Entlang der Längsachse des Filtergehäuses 12 ist eine Antriebswelle 38 angeordnet, welche über einen am Deckel des oberen Gehäuseteils 26 befestigten zentralen Antrieb 40 in Form eines Elektromotors oder eines pneumatischen Antriebs antreibbar ist. Starr mit der Antriebswelle 38 verbunden und über den Antrieb 40 drehbar sind eine Drucksteuereinrichtung 42 und eine Rückspüleinrichtung 44 vorhanden. Die Drucksteuereinrichtung 42 ist oberhalb der Filterelemente 20 im Verbindungsraum 14 angeordnet. Die Rückspüleinrichtung 44 ist unterhalb der Filterelemente 20 im Zwischenraum 18 angeordnet. Über eine Ablauföffnung 46 ist eine Fluidverbindung zu einer nur teilweise dargestellten Rückspülleitung 48 geschaffen, welche sich an die Rückspüleinrichtung 44 in vertikaler Richtung, entlang der Längsachse des Filtergehäuses 12, verlaufend anschließt. An die Rückspülleitung 48 und außerhalb der Filtervorrichtung 10 schließt sich eine Rückspülarmatur (nicht dargestellt), insbesondere in Form einer ansteuerbaren Ventileinrichtung, an, die, wie eingangs zum Stand der Technik erwähnt, die Rückspülfunktion unterstützt.

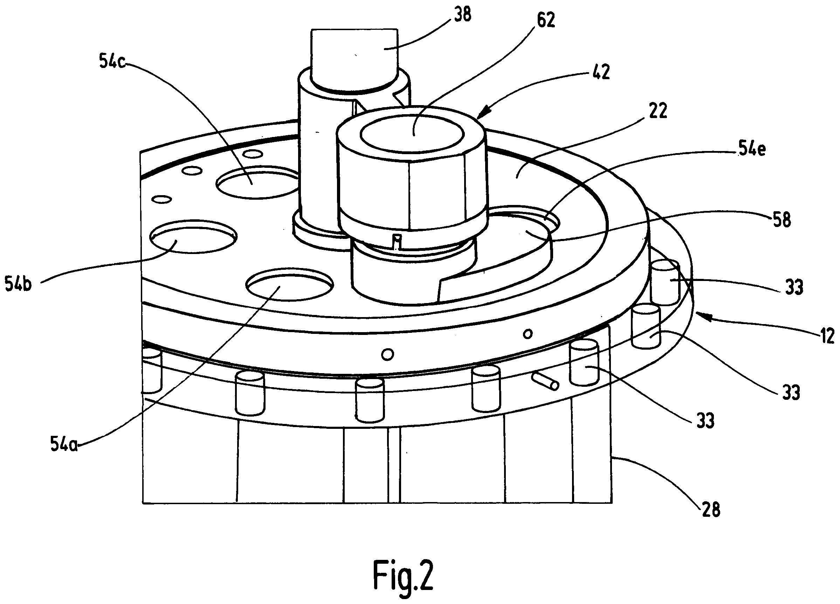

Am unteren Gehäuseteil 30 ist horizontal ausgerichtet ein Filtereinlass 50 für Unfiltrat am Filtergehäuse 12 angeordnet, in vergleichbarer Weise ein Filterauslass 52 für Filtrat am mittleren Gehäuseteil 28. Die oberen Elementöffnungen 54a bis 54f (s. Fig. 2) der Filterelemente 20 stellen jeweils eine Durchgangsöffnung durch den ersten Zwischenboden 22 und somit eine Fluidverbindung zwischen dem Verbindungsraum 14 und dem inneren Filterhohlraum des jeweiligen Filterelementes 20 dar. In entsprechender Weise stellen untere Elementöffnungen 56a bis 56f (s. Fig. 6) der Filterelemente 20 Durchtrittsöffnungen durch den zweiten Zwischenboden 24 und somit eine Fluidverbindung zwischen dem Zwischenraum 18 und dem inneren Filterhohlraum des jeweiligen Filterelementes 20 dar.

Beim Einsatz der Filtervorrichtung 10 zur Abreinigung eines Fluids wird das ungereinigte Fluid als Unfiltrat am Filtereinlass 50 in das Filtergehäuse 12 geleitet, erreicht vom Zwischenraum 18 aus durch fünf der sechs unteren Elementöffnungen 56 den Filterhohlraum des jeweiligen Filterelementes 20, und wird beim Durchströmen von fünf der sechs Filterelemente 20 von innen nach außen abgereinigt. Zur Erinnerung eines der sechs Elemente 20 steht aufgrund seiner Rückspülung für die Filtration nicht zur Verfügung. Vom Filtrationsraum 16 des Filtergehäuses 12 aus wird das gereinigte Fluid als Filtrat über den Filterauslass 52 aus der Filtervorrichtung 10 abgeleitet. Ein Teil des die fünf Filterelemente 20 durchströmenden Fluids bleibt teilweise ungereinigt und erreicht durch die oberen Elementöffnungen 54 hindurch den Verbindungsraum 14. Die Filterelemente 20 bilden mit ihren Filtermaterialien dabei die Grenzfläche zwischen der sogenannten Schmutzseite mit Unfiltrat im Zwischenraum 18, im Verbindungsraum 14 und im Filterhohlraum des jeweiligen zur Filtration genutzten Filterelements 20 und der Reinseite mit Filtrat im die Filterelemente 20 außen umgebenden Fluidraum, der den Filtrationsraum 16 innerhalb der Filtervorrichtung 10 bildet.

Um während der Filtration am Filtermaterial und/oder den Zwischenräumen des Spaltrohres innenseitig abgelagerte Partikel abzureinigen, wird die Rückspüleinrichtung 44 motorisch über den Antrieb 40 unter das zu reinigende Filterelement 20 bewegt und der Fluidweg des Unfiltrats vom Zwischenraum 18 in den Filterhohlraum des jeweiligen Filterelements 20 unterbrochen. Dabei strömt gleichzeitig Unfiltrat vom als Reservoir dienenden Verbindungsraum 14 in den zugehörigen inneren Filterhohlraum und erreicht mitsamt den abgereinigten Partikeln über die zugehörige eine untere Elementöffnung 56 und die Ablauföffnung 46 der Rückspüleinrichtung 44 die Rückspülleitung 48. Über die Rückspülleitung 48 wird das zur Rückspülung eingesetzte Fluid samt Schmutzfracht aus der Filtervorrichtung 10 abgeführt. Die tangentiale Strömung (Cross-Flow) vom Verbindungsraum 14 durch den Filterhohlraum des jeweiligen Filterelements 20 zur Rückspülleitung 48 wird durch Verschließen der zugehörigen oberen Elementöffnung 54 mittels der Drucksteuereinrichtung 42 unterbrochen. Durch den zugehörigen Strömungsabriss wird das Nachströmen von Fluid oder Filtrat von der Reinseite im Filtrationsraum 16 ins Innere des jeweiligen Filterelements 20 verstärkt und Schmutzpartikel impulsartig vom Filtermaterial abgereinigt. Dem vorangehend wird bei geöffneter Rückspülarmatur die Rückspülung durch das Druckgefälle zwischen dem Filtereinlass 50 und dem zuströmenden Unfiltrat und der Rückspülleitung 48 begünstigt, die der Abfuhr von Schmutzfluid mit den abgereinigten Partikeln aus der Vorrichtung 10 dient.

Um die zugehörigen Elementöffnungen 54a bis 54f, 56a bis 56f anforderungsgerecht zu verschließen, sind an der Drucksteuereinrichtung 42 eine Steuerplatte 58 und an der Rückspüleinrichtung 44 eine Abdeckplatte 60 vorgesehen. Die Steuerplatte 58 liegt auf der Oberseite des ersten Zwischenbodens 22 auf, in vergleichbarer Weise die Abdeckplatte 60 an der Unterseite des zweiten Zwischenbodens 24 an. Beide Platten 58, 60 weisen eine nierenförmige Grundform auf, welche zumindest zwei Elementöffnungen 54a bis 54f, 56a bis 56f im jeweiligen Zwischenboden 22, 24 zumindest teilweise überdeckt. Der Überdeckungsgrad der freien Durchflussquerschnitte von benachbarten Elementöffnungen entlang der Kreislinie ist jedoch bei der Abdeckplatte 60 deutlich größer als bei der Steuerplatte 58.

Die Drucksteuereinrichtung 42 und die Rückspüleinrichtung 44 sind starr mit der Antriebswelle 38 verbunden und werden über den Antrieb 40 in zugehörigen Drehbewegungen oberhalb bzw. unterhalb der Filterelemente 20 geführt. In der in Fig. 1a gezeigten Position sind die beiden Einrichtungen 42, 44 im Bereich des Filterelementes 20a und eines in Drehrichtung vorangehend benachbarten, in der Fig. 1a nicht gezeigten, Filterelementes 20f angeordnet. Demgegenüber ist die Position der Einrichtungen 42, 44 in Fig. 1b um etwa 100° gegen den Uhrzeigersinn versetzt gezeigt. Dementsprechend werden die Elementöffnungen 54f sowie 56f und 56e des Filterelements 20f sowie eines weiteren benachbarten, vorausgehenden Filterelements 20e durch die Platten 58 bzw. 60 zumindest teilweise überdeckt. Die Einrichtungen 42, 44 nehmen zunächst eine Position gemäß der Darstellung nach der Fig. 1b ein, bevor sie durch eine Drehung im Uhrzeigersinn von oben auf die Vorrichtung 10 gesehen zu einer Position nach der Fig. 1a weiterbewegt werden. Der Positionswechsel bezogen auf die einzelnen Filterelemente 20 erfolgt also fortlaufend im Uhrzeigersinn.

Zur Rückspülung eines der einzelnen Filterelemente 20a bis 20f parallel zum Filtrationsbetrieb werden die Drucksteuereinrichtung 42 und die Rückspüleinrichtung 44 mittels des Antriebs 40 mit konstanter Geschwindigkeit im Uhrzeigersinn bewegt. Hierbei werden nacheinander die oberen Elementöffnungen 54a bis 54f und die unteren Elementöffnungen 56a bis 56f von der Steuerplatte 58 bzw. der Abdeckplatte 60 überdeckt und anschließend wieder freigegeben. Der Darstellung nach den Fig. 1a, b ist gut entnehmbar, dass die Abdeckplatte 60 der Rückspüleinrichtung 44 der Steuerplatte 58 der Drucksteuereinrichtung 42 im Rahmen der Rückspülung "vorauseilt", d.h. bereits die Rückspülung für das Filterelement 20a beginnt, bevor die Steuerplatte 58 unter Freilassen der oberen Elementöffnung 54f die nachfolgende obere Elementöffnung 54a des Elements 20a unter Auslösen des Druckimpulses überfährt.

Fig. 2 zeigt einen vergrößerten Teilabschnitt der Filtervorrichtung und veranschaulicht die Ausgestaltung der Drucksteuereinrichtung 42, wobei die Steuerplatte 58 über ein Schwenkteil 62 starr mit der Antriebswelle 38 verbunden ist. Die am ersten Zwischenboden 22 auf- bzw. anliegende Steuerplatte 58 ist an ihrer Oberseite mit dem Schwenkteil 62 verbunden und mit diesem bewegbar geführt. Die im ersten Zwischenboden 22 ausgebildeten vier oberen Elementöffnungen 54a bis 54d sind in der in Fig. 2 gezeigten Darstellung vollständig freigegeben, wohingegen die fünfte Elementöffnung 54e von der Steuerplatte 58 nur noch teilweise überdeckt und die weitere, sechste Elementöffnung 54f durch die Steuerplatte 58 vollständig überdeckt ist. Randseitig am ersten Zwischenboden 22 sind Durchtrittsöffnungen 33 für die Schrauben-Befestigungselemente 32 (vgl. Fig. 1a und 1b) zur Befestigung von mittlerem Gehäuseteil 28 und oberem Gehäuseteil 26 (vgl. Fig. 1a und 1b) des Filtergehäuses 12 am Zwischenboden 22 vorgesehen.

Die Fig. 3a bis 3d zeigen die detaillierte Ausgestaltung der Steuerplatte 58, mittels der beim Rückspülvorgang einzelne obere Elementöffnungen 54a bis 54f (vgl. vorangegangene Figuren), die an der Oberseite des ersten Zwischenbodens 22 austreten, in Hintereinanderfolge überdeckt werden. Die perspektivische Darstellung nach der Fig. 3a zeigt, dass die Steuerplatte 58 ein kreisscheibenförmiges Befestigungsteil 64 und ein daran einstückig nach unten vorstehendes Plattenteil 66 aufweist. Am Befestigungsteil 64 sind zwei Befestigungsmöglichkeiten 68 zur Befestigung der Steuerplatte 58 am Schwenkteil 62 (vgl. Fig. 2) ausgebildet. Am Befestigungsteil 64 ist weiter eine Durchgangsöffnung 70 vorgesehen, welche ein gestuftes Profil aufweist, die vom Schwenkteil 62 abgedeckt ist.

Die Draufsicht nach der Fig. 3b auf die Oberseite der Steuerplatte 58 zeigt, dass die Durchgangsöffnung 70 konzentrisch zum Mittelpunkt des kreisförmigen Befestigungsteils 64 ausgebildet ist. Die beiden Befestigungslöcher 68 sind einander gegenüberliegend, diametral zur Durchgangsöffnung 70 angeordnet. Der Schnitt der Fig. 3c durch die Steuerplatte 58 zeigt, dass die Durchgangsöffnung 70 im Bereich des Plattenteils 66 verbreitert ausgebildet ist.

Am Befestigungsteil 64 ist ein erster Rand 72 vorgesehen. Ein gegenüber dem ersten Rand 72 in der Breite schmaler gehaltener zweiter Rand 74 ist umlaufend am Plattenteil 66 vorgesehen. Die perspektivische Darstellung der Fig. 3d zeigt einen zweiten Rand 74', welcher an der Unterseite der Steuerplatte 58 eine Steuerfläche 76 umlaufend umgibt. Der zweite Rand 74' erleichtert ein Gleiten und eine teilweise dichtende Anlage der Steuerfläche 76 am ersten Zwischenboden 22. Des Weiteren ist gemäß Draufsicht nach der Fig. 3b die Steuerplatte 58 nierenförmig ausgebildet.

Die Fig. 4a und 4b zeigen jeweils in perspektivischer Darstellung die Ausgestaltung der Rückspüleinrichtung 44, wobei in Fig. 4a eine Perspektive von unten und in Fig. 4b eine Perspektive von oben gewählt ist. Die Rückspüleinrichtung 44 umfasst einen bogenförmigen Rückspülarm 78, welcher sich an ein hohlzylinderförmiges Rohrstück 80 anschließt. Am oberen Ende des Rückspülarms 78 ist die Abdeckplatte 60 angeordnet und mittels eines Klemmteils 82 lagefixiert. Um ein paralleles Ableiten von Spülflüssigkeiten aus mehreren, vorzugsweise zwei, Filterelementen 20 (vgl. Fig. 1a, 1b, 2) zu ermöglichen, ist an der dem zweiten Zwischenboden 24 zugeordneten Oberseite der Abdeckplatte 60 eine Ausnehmung 84 vorgesehen. Die Ausnehmung 84 erstreckt sich über etwa 2/3 der gesamten Abdeckplatte 60 und umschließt an ihrer Bodenseite die kreisrunde Ablauföffnung 46. In der Einbaulage der Rückspüleinrichtung 44 ist das Rohrstück 80 entlang der Längsachse des Filtergehäuses 12 angeordnet und bildet die Verbindung zur Rückspülleitung 48. Zur lagefesten Anordnung der Rückspüleinrichtung 44 in der Filtervorrichtung 10 ist ein Anschlussstutzen 86 am oberen Ende des Rohrstücks 80 vorgesehen, der mit der Antriebswelle 38 des Antriebs 40 fest verbunden ist.

Die Fig. 5a bis 5c veranschaulichen die Ausgestaltung der Abdeckplatte 60.

Fig. 5a zeigt eine eben verlaufende Abdeckseite 88 der Abdeckplatte 60; Fig. 5b eine eben verlaufende Unterseite 90 der Abdeckplatte 60. An der Abdeckseite 88 ist die Ausnehmung 84 ausgebildet, wobei an deren Bodenseite die Ablauföffnung 46 vorgesehen ist. Die Ablauföffnung 46 ist von einem kreisförmigen Anschlussstück 92 räumlich umgeben und ragt an der Unterseite 90 der Abdeckplatte 60 in vertikaler Richtung vor.

Die Draufsicht auf die Ober- oder Abdeckseite der Abdeckplatte 60 in Fig. 5c veranschaulicht, dass das kreisförmige Anschlussstück 92 und die nierenförmige Ausnehmung 84 in verschiedenen Ebenen in der nierenförmigen Abdeckplatte 60 ausgebildet und angeordnet sind. Da die Abdeckplatte 60 der Steuerplatte 58 im laufenden Rückspülbetrieb von der Funktion der Abdeckung her vorauseilt, ist der in Verfahrrichtung, im gezeigten Ausführungsbeispiel in Richtung des Uhrzeigersinns, vor der Ablauföffnung 46 liegende Teil der Abdeckplatte 60 mit der Ausnehmung 84 größer ausgestaltet. Weiter ist am vorderen, in den Fig. 5a, c gezeigten oberen Ende der Ausnehmung 84 eine kreissegmentförmige Einbuchtung entsprechend der Kreisform einer von der Abdeckplatte 60 zu überdeckenden unteren Elementöffnung 56a bis 56f vorgesehen.

Die Besonderheit der an der Filtervorrichtung 10 ausgebildeten Drucksteuereinrichtung 42 und der Rückspüleinrichtung 44 ist eine parallele Rückspülung von mehreren, im gezeigten Ausführungsbeispiel zwei benachbarten Filterelementen 20a bis 20f. Dies wird dadurch erreicht, dass beide Einrichtungen 42, 44 über die Antriebswelle 38 drehfest miteinander verbunden sind und miteinander entlang der einzelnen Filterelemente 20a bis 20f in Hintereinanderabfolge bewegt werden. Die in Fig. 6 gezeigte Draufsicht auf den zweiten Zwischenboden 24 mit den unteren Elementöffnungen 56a bis 56f veranschaulicht, dass die Abdeckplatte 60 und die Steuerplatte 58, die in fiktiver Darstellung übereinandergelegt sind, einen räumlichen Versatz zueinander aufweisen. Das sich an das Plattenteil 66 der Steuerplatte 58 anschließende kreisförmige Befestigungsteil 64 ist mit dem die Ablauföffnung 46 umgebenden Anschlussstück 92 der Abdeckplatte 60 in einem Winkelbereich von 18°, ausgehend von der Mitten- oder Längsachse der Filtervorrichtung 10, in Überdeckung. Der zugehörige Überdeckungsbereich ist mit 94 bezeichnet.

In der in Fig. 6 gezeigten Position der Drucksteuereinrichtung 42 und der Rückspüleinrichtung 44 überdeckt die Steuerplatte 58 die der unteren Elementöffnung 56a zugeordnete obere Elementöffnung 54a (vgl. Fig. 1a, 1b, 2) vollständig. Die Abdeckplatte 60 überdeckt hingegen mit ihrer Ausnehmung 84 die beiden benachbarten unteren Elementöffnungen 56a und 56b und leitet auf diese Weise gleichzeitig Spülflüssigkeit aus den zugehörigen Filterelementen 20a, 20b ab. Mit seinem über die Ausnehmung 84 vorragenden Teil kommt die Abdeckplatte 60 zusehends bereits in den Bereich der nachfolgenden unteren Elementöffnung 56c, so dass bei einer weiteren Drehbewegung der Rückspüleinrichtung 44 im Uhrzeigersinn die Ausnehmung 84 unter den freien Querschnitt der unteren Elementöffnung 56c gedreht wird und auf diese Weise den Rückspülvorgang im Filterelement 20c einleitet. Die Steuerplatte 58 hat dann zu diesem Zeitpunkt vollständig die obere Elementöffnung 54a überfahren und für das Element 20a den Druckimpuls ausgelöst, bevor die Platte 58 zum nachfolgenden Element 20b weiterbewegt wird.

Sobald die Steuerplatte 58 die zugehörige obere Elementöffnung 54a freigibt, ist der entsprechende Rückspülvorgang vollständig im Rahmen eines Umlaufs beendet. Mit den anderen Filterelementen 20, die auf ihrer Unterseite nicht von der Abdeckplatte 60 überfahren sind, wird weiter die Filtration mit der Filtervorrichtung 10 zugeführtem flüssigen Unfiltrat durchgeführt.

## Patentansprüche

1. Filtervorrichtung (10) mit einer Mehrzahl von Filterelementen (20), die in einem Filtergehäuse (12) mit einem Filtereinlass (50) für ein zu filtrierendes Fluid und einem Filterauslass (52) für das gefilterte Fluid aufnehmbar sind, wobei die Filterelemente (20) für eine Filtration oder Rückspülung über ihren Elementmantel in beiden Richtungen durchströmbar sind und die an ihren beiden gegenüberliegenden Enden je eine obere (54) und eine untere Elementöffnung (56) aufweisen, wobei im Betrieb gleichzeitig zumindest ein Filterelement (20) die Filtration vornimmt und zumindest ein anderes Filterelement (20) zum Abreinigen seiner wirksamen Filterfläche mittels einer Rückspüleinrichtung (44) rückspülbar ist, die zur Unterstützung der Rückspülung mit einer Drucksteuereinrichtung (42) zusammenwirkt, die mindestens ein Drucksteuerelement aufweist, mittels dessen bei einem Rückspülvorgang die Fluidströmung entlang des abzureinigenden Filterelements (20) steuerbar ist, wobei die Filtervorrichtung (10) einen Verbindungsraum (14) aufweist, der zumindest teilweise mit den oberen Elementöffnungen (54) des die Unfiltratseite bildenden Filterhohlraumes der Filterelemente (20) in Verbindung ist, wobei ein Fluidweg vorgesehen ist, über den bei der Filtration Unfiltrat in den Verbindungsraum (14) einströmt, und mittels des Drucksteuerelementes der Durchstrom von Unfiltrat durch die dem abzureinigenden Filterelement (20) zugehörige obere Elementöffnung (54) hindurch steuerbar ist, wobei die Rückspüleinrichtung (44) mit einer Ablauföffnung (46) für das Abreinigungsfluid unter die untere Elementöffnung (56) des jeweils rückzuspülenden Filterelementes (20) bringbar ist, wobei die Drucksteuereinrichtung (42) mindestens eine Steuerplatte (58) aufweist, die innerhalb des Verbindungsraumes (14) angeordnet in vorgebbarer Abfolge die einzelnen oberen Elementöffnungen (54) der jeweils rückzuspülenden Filterelemente (20) mit zunehmender Überdeckung und erneuter Freigabe seitlich überfährt, und wobei die Ablauföffnung (46) der Rückspüleinrichtung (44) zumindest noch teilweise in fluidführender Verbindung mit der unteren Elementöffnung (56) des jeweils rückzuspülenden Filterelementes (20) ist, während dessen die obere Elementöffnung (54) von der Drucksteuereinrichtung (42) angesteuert ist, wobei ein Sammelraum der Rückspüleinrichtung (44) aus einer Ausnehmung (84) in einer Abdeckplatte (60) gebildet ist, die von einem Rückspülarm (78) geführt ist, in den die Ablauföffnung (46) mündet, die vorzugsweise über den Rückspülarm (78) fluidführend mit einer Ventilsteuereinrichtung verbunden ist,
**dadurch gekennzeichnet,**
**dass** ein kreisförmiges Anschlussstück (92) und die Ausnehmung (84), die nierenförmig ist, in verschiedenen Ebenen in der Abdeckplatte (60), die nierenförmig ist, ausgebildet und angeordnet sind;
**dass** die Ablauföffnung (46) von dem Anschlussstück (92) räumlich umgeben ist; und
**dass** das Anschlussstück (92) zum Anschluss der Abdeckplatte (60) an den Rückspülarm (78) vorgesehen ist.

2. Filtervorrichtung nach Anspruch 1, **dadurch gekennzeichnet, dass** die Rückspüleinrichtung (44) den Sammelraum mit der Ablauföffnung (46) aufweist, der bereits fluidführend mit dem in der Abfolge der Rückspülung nachfolgenden Filterelement (20) über seine untere Elementöffnung (56) zumindest teilweise verbunden ist, während die Steuerplatte (58) der Drucksteuereinrichtung (42) noch das in der Folge vorangehende Filterelement (20) mit seiner oberen Elementöffnung (54) seitlich überfährt.

3. Filtervorrichtung nach Anspruch 1 oder 2, **dadurch gekennzeichnet, dass** die Erstreckung des Sammelraumes (84) derart gewählt ist, dass er zumindest in einer Schwenkstellung des Rückspülarmes (78) zwei untere Elementöffnungen (56) zweier benachbarter Filterelemente (20) vollständig überdeckt.

4. Filtervorrichtung nach einem der vorstehenden Ansprüche, **dadurch gekennzeichnet, dass** die Drucksteuer- (42) und die Rückspüleinrichtung (44) einen gemeinsamen Antrieb (40) aufweisen, der über starre Antriebselemente (62) die Steuer- (58) und die Abdeckplatte (60) mit gleichbleibendem räumlichen Versatz ansteuert, oder dass die Drucksteuer- (42) und die Rückspüleinrichtung (44) stationär innerhalb des Filtergehäuses (12) angeordnet sind und die Filterelemente (20) mittels des gemeinsamen Antriebes (40) karussellartig unter die Einrichtungen (42, 44) verfahrbar sind.

5. Filtervorrichtung nach einem der vorstehenden Ansprüche, **dadurch gekennzeichnet, dass** die oberen (54) und die unteren Elementöffnungen (56) eines jeden Filterelementes (20) in Zwischenböden (22, 24) innerhalb des Filtergehäuses (12) angeordnet sind, deren Durchlassöffnungen durch die Elementöffnungen (54, 56) selbst gebildet sind.

6. Filtervorrichtung nach einem der vorstehenden Ansprüche, **dadurch gekennzeichnet, dass** die Steuer- (58) und die Abdeckplatte (60) im Wesentlichen abstandsfrei den jeweiligen Zwischenboden (22, 24) mit den Elementöffnungen (54, 56) seitlich überfahren.

7. Filtervorrichtung nach einem der vorstehenden Ansprüche, **dadurch gekennzeichnet, dass** die Abdeckplatte (60) mit Überständen vorgebbarer Länge, insbesondere in der Verfahrrichtung gesehen, seitlich den Sammelraum (84) begrenzt und in der Anlage mit dem Zwischenboden (24) mit den unteren Elementöffnungen (56) der Filterelemente (20) bringbar ist.

8. Filtervorrichtung nach einem der vorstehenden Ansprüche, **dadurch gekennzeichnet, dass** die Dauer der jeweiligen Rückspülung über die Anzahl der Umdrehungen mit dem gemeinsamen Antrieb (40) oder über eine vordefinierte Rückspülzeit gesteuert ist.

9. Filtervorrichtung nach einem der vorstehenden Ansprüche, **dadurch gekennzeichnet, dass** die jeweiligen Filterelemente (20) konisch ausgebildet sind.

## Claims

1. Filter device (10) having a plurality of filter elements (20) which can be accommodated in a filter housing (12) with a filter inlet (50) for a fluid to be filtered and a filter outlet (52) for the filtered fluid, wherein the filter elements (20) for filtration or backflushing can be flowed through in both directions via their element casing and which each have an upper (54) and a lower element opening (56) at their two opposing ends, wherein, in operation, at least one filter element (20) simultaneously carries out the filtration and at least one other filter element (20) can be backflushed for cleaning its effective filter surface by means of a backflushing device (44) which, to promote backflushing, cooperates with a pressure control device (42) which comprises at least one pressure control element by means of which the fluid flow along the filter element (20) to be cleaned can be controlled during a backflushing process, wherein the filter device (10) comprises a connecting chamber (14) which is at least partially in communication with the upper element openings (54) of the filter cavity of the filter elements (20) forming the unfiltered medium side, wherein a fluid path is provided via which unfiltered medium flows into the connecting chamber (14) during filtration, and the flow of unfiltered medium through the upper element opening (54) associated with the filter element (20) to be cleaned can be controlled by means of the pressure control element, wherein the backflushing device (44) having a drain opening (46) for the cleaning fluid can be brought under the lower element opening (56) of the respective filter element (20) to be cleaned, wherein the pressure control device (42) comprises at least one control plate (58) which, arranged inside the connecting chamber (14), passes laterally over the individual upper element openings (54) of the respective filter elements (20) to be backflushed in a predefinable sequence with increasing cover and renewed uncovering, and wherein the drain opening (46) of the backflushing device (44) is still at least partially in fluid-conducting communication with the lower element opening (56) of the respective filter element (20) to be backflushed, while the upper element opening (54) is controlled by the pressure control device (42), wherein a collecting chamber of the backflushing device (44) is formed from a recess (84) in a cover plate (60) which is guided by a backflush arm (78) into which the drain opening (46) discharges, said drain opening preferably being connected in a fluid-conducting manner to a valve control device via the backflush arm (78),
**characterised in that**
a circular connecting piece (92) and the recess (84), which is kidney-shaped, are configured and arranged in different planes in the cover plate (60), which is kidney-shaped;
**in that** the drain opening (46) is spatially surrounded by the connecting piece (92); and
**in that** the connecting piece (92) is provided for connecting the cover plate (60) to the backflush arm (78).

2. Filter device according to claim 1, **characterised in that** the backflushing device (44) comprises the collecting chamber with the drain opening (46) which is already at least partially in fluid-conducting communication with the filter element (20) following in the backflushing sequence via its lower element opening (56), while the control plate (58) of the pressure control device (42) is still passing laterally over the filter element (20) preceding in the sequence with its upper element opening (54).

3. Filter device according to claim 1 or 2, **characterised in that** the extension of the collecting chamber (84) is selected in such a manner that it completely covers two lower element openings (56) of two adjacent filter elements (20) at least in a pivot position of the backflush arm (78).

4. Filter device according to one of the preceding claims, **characterised in that** the pressure control device (42) and the backflushing device (44) have a common drive (40) which, via rigid drive elements (62), controls the control plate (58) and the cover plate (60) with a constant spatial offset, or **in that** the pressure control device (42) and the backflushing device (44) are arranged to be stationary inside the filter housing (12) and the filter elements (20) can be moved under the devices (42, 44) in a carousel-like manner by means of the common drive (40).

5. Filter device according to one of the preceding claims, **characterised in that** the upper (54) and the lower element openings (56) of each filter element (20) are arranged in intermediate bases (22, 24) inside the filter housing (12), the passage openings of which are formed by the element openings (54, 56) themselves.

6. Filter device according to one of the preceding claims, **characterised in that** the control plate (58) and the cover plate (60) pass laterally over the respective intermediate base (22, 24) with the element openings (54, 56) substantially without a gap.

7. Filter device according to one of the preceding claims, **characterised in that** the cover plate (60) with overhangs of predefinable length, particularly when viewed in the direction of travel, defines the collecting chamber (84) laterally and can be brought into contact with the intermediate base (24) with the lower element openings (56) of the filter elements (20).

8. Filter device according to one of the preceding claims, **characterised in that** the duration of the respective backflushing is controlled via the number of revolutions with the common drive (40) or via a predefined backflush time.

9. Filter device according to one of the preceding claims, **characterised in that** the respective filter elements (20) are conical.

## Revendications

1. Dispositif (10) de filtration comprenant une pluralité d'éléments (20) de filtre, qui peuvent être reçus dans une enveloppe (12) de filtre ayant une entrée (50) pour un fluide à filtrer et une sortie (52) pour le fluide filtré, dans lequel les éléments (20) de filtre peuvent être traversés dans les deux sens par leur surface latérale pour une filtration ou un lavage en retour, et ont à leurs deux extrémités opposées respectivement une ouverture (54) supérieure et une ouverture (56) inférieure, dans lequel, en fonctionnement en même temps au moins un élément (20) de filtre effectue une filtration et au moins un autre élément (20) de filtre peut, pour le nettoyage de sa surface de filtre efficace, être lavé en retour au moyen d'un dispositif (44) de lavage en retour, qui, pour assister le lavage en retour, communique avec un dispositif (42) de commande de la pression, qui a au moins un élément de commande de la pression, au moyen duquel, lors d'une opération de lavage en retour, le courant de fluide peut être commandé le long de l'élément (20) de filtre à nettoyer, dans lequel le dispositif (10) de filtration a un espace (14) de liaison, qui est en liaison, au moins en partie, avec les ouvertures (54) supérieures de la cavité de filtre, formant le côté du non filtrat, des éléments (20) de filtre, dans lequel il est prévu un trajet de fluide, par lequel, lors de la filtration, du non filtrat entre dans l'espace (14) de liaison et, au moyen de l'élément de commande de la pression, le passage de non filtrat dans l'ouverture (54) supérieure appartenant à l'élément (20) de filtre à nettoyer peut être commandé, dans lequel le dispositif (44) de lavage en retour peut, par une ouverture (46) d'évacuation du fluide de nettoyage, être mis sous l'ouverture (56) inférieure de l'élément (20) de filtre respectif à laver en retour, dans lequel le dispositif (42) de commande de la pression a au moins une plaque (58) de commande, qui, disposée à l'intérieur de l'espace (14) de liaison, passe au -dessus, latéralement avec recouvrement croissant et dégagement renouvelé, en une succession pouvant être donnée à l'avance, des diverses ouvertures (54) supérieures des éléments (20) de filtre respectifs à laver en retour, et dans lequel l'ouverture (46) d'évacuation du dispositif (44) de lavage en retour est, au moins encore en partie, en communication fluidique avec l'ouverture (56) inférieure de l'élément (20) de filtre respectif à laver en retour, tandis que l'ouverture (54) supérieure de l'élément est commandée par le dispositif (42) de commande de la pression, dans lequel un espace collecteur du dispositif (44) de lavage en retour est formé d'un évidement (84) dans une plaque (60) de recouvrement, qui est guidée par un bras (78) de lavage en retour, dans lequel débouche l'ouverture (46) d'évacuation, laquelle, de préférence, communique fluidiquement avec un dispositif de commande de soupape par le bras (78) de lavage en retour,
**caractérisé**
**en ce qu'**une pièce (92) circulaire de raccordement et l'évidement (84), qui est réniforme, sont constitués et disposés dans des plans différents dans la plaque (60) de recouvrement, qui est réniforme ;
**en ce que** l'ouverture (46) d'évacuation est entourée dans l'espace de la pièce (92) de raccordement ; et
**en ce que** la pièce (92) de raccordement est prévue pour le raccordement de la plaque (60) de recouvrement au bras (78) de lavage en retour.

2. Dispositif de filtration suivant la revendication 1, **caractérisé en ce que** le dispositif (44) de lavage en retour a l'espace de collecte, qui a l'ouverture (46) d'évacuation et qui communique, au moins en partie, déjà fluidiquement avec l'élément (20) de filtre, suivant dans la succession du lavage en retour, par son ouverture (56) inférieure, tandis que la plaque (58) de commande du dispositif (42) de commande de la pression passe encore au -dessus latéralement de l'élément (20) de filtre, précédent dans la succession, par son ouverture (54) supérieure.

3. Dispositif de filtration suivant la revendication 1 ou 2, **caractérisé en ce que** l'étendue de l'espace (84) collecteur est choisie de manière à ce que, au moins dans une position de pivotement du bras (78) de lavage en retour, il recouvre complètement deux ouvertures (56) inférieures de deux éléments (20) de filtre voisins.

4. Dispositif de filtration suivant l'une des revendications précédentes, **caractérisé en ce que** le dispositif (42) de commande de la pression et le dispositif (44) de lavage en retour ont un entraînement (40) commun, qui, par des éléments (62) d'entraînement fixes, commande la plaque (58) de commande et la plaque (60) de recouvrement avec un décalage dans l'espace restant constant, ou **en ce que** le dispositif (42) de commande de la pression et le dispositif (44) de lavage en retour sont disposés de manière fixe à l'intérieur de l'enveloppe (12) du filtre et les éléments (20) de filtre peuvent être déplacés à la manière d'un carrousel sous les dispositifs (42, 44) au moyen de l'entraînement (40) commun.

5. Dispositif de filtration suivant l'une des revendications précédentes, **caractérisé en ce que** les ouvertures (54) supérieures et les ouvertures (56) inférieures de chaque élément (20) de filtre sont disposées dans des plateaux (22, 24) intermédiaires à l'intérieur de l'enveloppe (12) du filtre, dont les ouvertures de passage sont formées elles - même par les ouvertures (54, 56) des éléments.

6. Dispositif de filtration suivant l'une des revendications précédentes, **caractérisé en ce que** la plaque (58) de commande et la plaque (60) de recouvrement passent latéralement sensiblement sans distance au -dessus des plateaux (22, 24) intermédiaires respectifs ayant les ouvertures (54, 56) d'élément.

7. Dispositif de filtration suivant l'une des revendications précédentes, **caractérisé en ce que** la plaque (60) de recouvrement délimite latéralement l'espace (84) de collecte par des parties saillantes de longueur pouvant être définie à l'avance, considéré notamment dans la direction de déplacement, et peut être mise en contact avec le plateau (24) intermédiaire ayant les ouvertures (56) inférieures des éléments (20) de filtre.

8. Dispositif de filtration suivant l'une des revendications précédentes, **caractérisé en ce que** la durée du lavage en retour respectif est commandé par le nombre des rotations par l'entraînement (40) commun ou par un temps de lavage en retour défini à l'avance.

9. Dispositif de filtration suivant l'une des revendications précédentes, **caractérisé en ce que** les éléments (20) de filtre respectifs sont constitués de manière conique.
